(19) Europäisches Patentamt
European Patent Office
Office européen des brevets

(11) EP 4 450 548 A1

(12) # EUROPEAN PATENT APPLICATION
published in accordance with Art. 153(4) EPC

(43) Date of publication:
**23.10.2024 Bulletin 2024/43**

(21) Application number: **22907757.3**

(22) Date of filing: **25.11.2022**

(51) International Patent Classification (IPC):
***C08K 5/521*** *(2006.01)* ***C08K 5/00*** *(2006.01)*
***C08L 67/02*** *(2006.01)* ***C08G 63/672*** *(2006.01)*
***C08G 63/78*** *(2006.01)*

(52) Cooperative Patent Classification (CPC):
**C08G 63/672; C08G 63/78; C08K 5/00; C08K 5/521; C08L 67/02**

(86) International application number:
**PCT/KR2022/018841**

(87) International publication number:
**WO 2023/113288 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.12.2021 KR 20210181996**

(71) Applicant: **Kolon Industries, Inc.**
**Seoul 07793 (KR)**

(72) Inventors:
- **KIM, Ho Sub**
**Seoul 07793 (KR)**
- **SUH, Young Sung**
**Seoul 07793 (KR)**
- **PARK, No Woo**
**Seoul 07793 (KR)**
- **HONG, Choong Hee**
**Seoul 07793 (KR)**
- **NOH, Kyung Gyu**
**Seoul 07793 (KR)**
- **PARK, Ki Hyun**
**Seoul 07793 (KR)**

(74) Representative: **Ter Meer Steinmeister & Partner Patentanwälte mbB**
**Nymphenburger Straße 4**
**80335 München (DE)**

(54) **POLYESTER RESIN AND PREPARATION METHOD THEREFOR**

(57) The present invention relates to a polyester resin and a preparation method therefor. Specifically, provided, in an embodiment of the present invention, is a polyester resin including: a copolymer including a diacid moiety and a diol moiety; a phosphorus-based heat stabilizer; and a complementary colorant, wherein the diacid moiety includes a furandicarboxylic acid-based compound-derived moiety, the diol moiety includes an alkylene glycol-based compound-derived moiety, the phosphorus-based heat stabilizer includes an ester group at the terminal end thereof, and the complementary colorant includes a blue dye and a red dye.

EP 4 450 548 A1

## Description

### [Technical Field]

The present invention relates to a polyester resin and a preparation method therefor.

### [Background Art]

A polyester resin refers to a polymer resin having an ester (RO-C(=O)-R') functional group in the main chain and is used for various purposes such as packaging, displays, insulating materials, etc. in various industrial fields.

Representative examples of the polyester resin may be a polyethylene terephthalate (PET) resin prepared by a reaction of terephthalic acid (TPA) and ethylene glycol (EG).

However, a main raw material of the terephthalic acid is paraxylene, which is produced by refining crude oil. Accordingly, the production and use of the terephthalic acid causes depletion of crude oil resources. In addition, the terephthalic acid, when decomposed, discharges carbon dioxide, which causes environmental pollution and climate change such as global warming, etc.

In this regard, attempts to replace the terephthalic acid with 2,5-furan dicarboxylic acid (FDCA) in the production of the polyester resin are being made. Herein, the furan dicarboxylic acid, which is a material derived from biomass, may prevent the depletion of crude oil resources and minimize the environmental pollution, the climate change, etc. due to its biodegradability.

However, furan dicarboxylic acid has low thermal stability, causing thermal discoloration such as yellowing or browning during the preparing process of polyester resin. Therefore, when replacing terephthalic acid with furan dicarboxylic acid, it is inevitable to obtain a yellowed or browned polyester resin.

### [Disclosure]

### [Description of the Drawings]

[Technical Problem]

The purpose of the present invention is to provide a biodegradable polyester resin with suppressed thermal discoloration and a preparation method therefor.

[Technical Solution]

In an embodiment of the present invention, a polyester resin includes a copolymer including a diacid moiety and a diol moiety; a phosphorus-based heat stabilizer; and a complementary colorant, wherein the diacid moiety includes a furandicarboxylic acid-based compound-derived moiety, the diol moiety includes an alkylene glycol-based compound-derived moiety, the phosphorus-based heat stabilizer includes an ester group at the terminal end thereof, and the complementary colorant includes a blue dye and a red dye.

In another embodiment of the present invention, a method of preparing a polyester resin includes esterifying a monomer mixture including a diacid component and a diol component; pre-polymerizing a esterification reaction product in the presence of a phosphorus-based heat stabilizer and a complementary colorant; and subjecting the pre-polymerized polymer to a poly-condensation reaction, wherein the diacid component includes a furan dicarboxylic acid-based compound, the diol component includes an alkylene glycol-based compound, the phosphorus-based heat stabilizer includes an ester group at the terminal end thereof, and the complementary colorant includes a blue dye and a red dye.

### [Advantageous Effects]

In an embodiment of the present invention, it is possible to provide a polyester resin that exhibits biodegradability, suppresses thermal discoloration, and exhibits high brightness by complementary color.

In another embodiment of the present invention, it is possible to provide a method for obtaining a polyester resin that exhibits high brightness by suppressing heat discoloration during the preparing process and complementing the already discolored resin.

**[Best Mode for Invention]**

(Definition of Terms)

Throughout this specification, when a part "includes" a certain element, this means that it may further include other elements rather than excluding other elements, unless specifically stated to the contrary.

As used throughout this specification, the term "~ing step" or "step of ~ing" does not mean "step for ~ing."

In this specification, 'moiety' refers to a certain portion or unit derived from a specific compound when the specific compound participates in a chemical reaction and is included in the product of the chemical reaction.

Specifically, in the polyester resin, the furan-based dicarboxylic acid-derived 'moiety' and alkylene glycol-derived 'moiety' are a portion derived from furan-based dicarboxylic acid and a portion derived from alkylene glycol, respectively.

As used herein, unless otherwise specified, the term "alkyl" refers to a saturated, monovalent aliphatic hydrocarbon radical, including linear and branched chains, having the specified number of carbon atoms. The alkyl group typically has 1 to 20 carbon atoms ("$C_1$-$C_{20}$ alkyl"), preferably 1 to 12 carbon atoms ("$C_1$-$C_{12}$ alkyl"), more preferably 1 to 8 carbon atoms ("$C_1$-$C_8$ alkyl"), 1 to 6 carbon atoms ("$C_1$-$C_6$ alkyl"), or 1 to 4 carbon atoms ("$C_1$-$C_4$ alkyl"). Examples of the alkyl group include methyl, ethyl, n-propyl, isopropyl, n-butyl, iso-butyl, tert-butyl, n-pentyl, isopentyl, neopentyl, n-hexyl, n-heptyl, n-octyl, and the like. The alkyl group may be substituted or unsubstituted. In particular, unless otherwise specified, an alkyl group may be substituted with one or more halogens, up to the total number of hydrogen atoms present on the alkyl moiety. Thus, $C_1$-$C_4$ alkyl includes halogenated alkyl groups, such as fluorinated alkyl groups having 1 to 4 carbon atoms, such as trifluoromethyl ($-CF_3$) or difluoroethyl ($-CH_2CHF_2$).

The alkyl group described herein as optionally substituted may be substituted with one or more substituents, and the substituents are independently selected unless otherwise stated. The total number of substituents is equal to the total number of hydrogen atoms on the alkyl moiety to the extent that such substitution satisfies chemical sense. Optionally substituted alkyl groups may typically have 1 to 6 optional substituents, often 1 to 5 optional substituents, preferably 1 to 4 optional substituents, more preferably 1 to 3 optional substituents.

Suitable optional substituents for the alkyl group include, but are not limited to, $C_1$-$C_8$ alkyl, $C_2$-$C_8$ alkenyl, $C_2$-$C_8$ alkynyl, $C_3$-$C_8$ cycloalkyl, 3- to 12-membered heterocyclyl, $C_6$-$C_{12}$ aryl, 5- to 12-membered heteroaryl, halo, =O (oxo), =S (thiono), =N-CN, $=N-OR^x$, $=NR^x$, -CN, $-C(O)R^x$, $-CO_2R^x$, $-C(O)NR^xR^y$, - $SR^x$, $-SOR^x$, $-SO_2R^x$, $-SO_2NR^xR^y$, $-NO_2$, $-NR^xR^y$, $-NR^xC(O)R^y$, $-NR^xC(O)NR^xR^y$, - $NR^xC(O)OR^x$, $-NR^xSO_2R^y$, $-NR^xSO_2NR^xR^y$, $-OR^x$, $-OC(O)R^x$, and $-OC(O)NR^xR^y$, wherein each $R^x$ and $R^y$ are each independently hydrogen (H), $C_1$-$C_8$ alkyl, $C_1$-$C_8$ acyl, $C_2$-$C_8$ alkenyl, $C_2$-$C_8$ alkynyl, $C_3$-$C_8$ cycloalkyl, 3- to 12- membered heterocyclyl, $C_6$-$C_{12}$ aryl, or 5- to 12-membered heteroaryl, or $R^x$ and $R^y$ may form a 3- to 12-membered heterocyclyl or 5- to 12-membered heteroaryl ring together with the N atom to which they are attached, each may optionally include 1, 2 or 3 additional heteroatoms selected from O, N and S(O)q, where q is 0 to 2; each of $R^x$ and $R^y$ is optionally substituted with one to three substituents selected from halo, =O, =S, =N-CN, =N-OR', =NR', -CN, -C(O)R', $-CO_2R'$, $-C(O)NR'_2$, -SOR', - $SO_2R'$, $-SO_2NR'_2$, $-NO_2$, $-NR'_2$, -NR'C(O)R', $-NR'C(O)NR'_2$, -NR'C(O)OR', - $NR'SO_2R'$, $-NR'SO_2NR'_2$, -OR', -OC(O)R' and $-OC(O)NR'_2$, wherein each R' is each independently hydrogen (H), $C_1$-$C_8$ alkyl, $C_1$-$C_8$ acyl, $C_2$-$C_8$ alkenyl, $C_2$-$C_8$ alkynyl, $C_3$-$C_8$ cycloalkyl, 3- to 12- membered heterocyclyl, $C_6$-$C_{12}$ aryl, or $C_5$-$C_{12}$ heteroaryl; each of the $C_1$-$C_8$ alkyl, $C_2$-$C_8$ alkenyl, $C_2$-$C_8$ alkynyl, $C_3$-$C_8$ cycloalkyl, 3- to 12- membered heterocyclyl, $C_6$-$C_{12}$ aryl and 5- to 12-membered heteroaryl may be optionally substituted as further defined.

As used herein, unless otherwise specified, the term "alkoxy" refers to a monovalent -O-alkyl group in which the alkyl moiety has the specified number of carbon atoms. The alkoxy group typically has 1 to 8 carbon atoms ("$C_1$-$C_8$ alkoxy"), or 1 to 6 carbon atoms ("$C_1$-$C_6$ alkoxy"), or 1 to 4 carbon atoms ("$C_1$-$C_4$ alkoxy"). For example, $C_1$-$C_4$ alkoxy includes methoxy ($-OCH_3$), ethoxy ($-OCH_2CH_3$), isopropoxy ($-OCH(CH_3)_2$), tert-butyloxy ($-OC(CH_3)_3$), and the like. The alkoxy group is unsubstituted or substituted on the alkyl moiety by the same groups described herein as suitable for alkyl. In particular, the alkoxy group may be optionally substituted with one or more halo atoms, especially one or more fluoro atoms, up to the total number of hydrogen atoms present on the alkyl moiety. Such groups are more specifically referred to as "haloalkoxy" groups having a certain number of carbon atoms and substituted with one or more halo substituents, for example, when fluorinated, "fluoroalkoxy" groups, and typically such groups have from 1 to 6 carbon atoms, preferably 1 to 4 carbon atoms, often 1 or 2 carbon atoms, and 1, 2 or 3 halo atoms (i.e., "$C_1$-$C_6$ haloalkoxy", "$C_1$-$C_4$ haloalkoxy" or "$C_1$-$C_2$ haloalkoxy"). More specifically, the fluorinated alkyl group may be specifically referred to as a fluoroalkoxy group, typically substituted with 1, 2 or 3 fluoro atoms, such as a $C_1$-$C_6$, $C_1$-$C_4$, or $C_1$-$C_2$ fluoroalkoxy group. Therefore, $C_1$-$C_4$ fluoroalkoxy includes trifluoromethyloxy ($-OCF_3$), difluoromethyloxy ($-OCF_2H$), fluoromethyloxy ($-OCFH_2$), difluoroethyloxy ($-OCH_2CF_2H$), and the like.

As used herein, unless otherwise specified, the term "divalent aliphatic hydrocarbon (i.e., alkylene)" refers to a divalent hydrocarbyl group having a specified number of carbon atoms, capable of linking two other groups together. The alkylene often refers to $-(CH_2)_n-$, where n is 1 to 8, preferably n is 1 to 4. Where specified, the alkylene may also be substituted with other groups and may include at least one degree of unsubstitution (i.e., an alkenylene or alkynylene

moiety) or ring. The open valency of an alkylene need not be at the opposite end of the chain. Accordingly, branched alkylene groups such as -CH(Me)-, - $CH_2CH(Me)$- and -$C(Me)_2$- are also included within the scope of the term "alkylene", and cyclic groups such as cyclopropane-1,1-diyl and unsaturated groups such as ethylene (-CH=CH-) or propylene (-$CH_2$-CH=CH-). The alkylene groups are unsubstituted or substituted by the same groups described herein as suitable for alkyl.

As used herein, the terms "optionally substituted" and "substituted or unsubstituted" may be used interchangeably to indicate that the particular group described may have no non-hydrogen substituents (i.e., unsubstituted), or that the group may have one or more non-hydrogen substituents (i.e., unsubstituted). Unless otherwise specified, the total number of substituents that may be present is equal to the number of H atoms present in the unsubstituted form of the group being described. If an optional substituent is attached through a double bond (e.g., an oxo (=O) substituent), the group occupies available valency and the total number of other substituents included is reduced by two. When optional substituents are independently selected from the list of substitutes, the selected groups are the same or different. It will be understood that throughout this specification, the number and nature of optional substituents will be limited to the extent that such substitutions satisfy chemical sense.

In this specification, the CIE1976 L*a*b* color system is defined by the CIE (International Commission on Illumination) and corresponds to the color space currently standardized globally.

In this CIE 1976 L*a*b* color space, the L* value represents brightness in color coordinates and ranges from 0 to 100, with a value of 0 meaning complete black and 100 meaning complete white. a* indicates whether the color is biased toward red or green, and if this value is positive, that is, "+", it is red; and if this value is negative, that is, "-", it is green. b* indicates whether the color is biased toward yellow or blue, and if this value is a positive, it is yellow; and if this value is negative, that is, "-", it is blue.

Based on the above definitions, embodiments of the present invention will be described in detail. However, these embodiments are exemplary, the present disclosure is not limited thereto and the present disclosure is defined by the scope of claims.

**(Polyester Resin)**

In an embodiment of the present invention, a polyester resin includes a copolymer including a diacid moiety and a diol moiety; a phosphorus-based heat stabilizer; and a complementary colorant, wherein the diacid moiety includes a furandicarboxylic acid-based compound-derived moiety, the diol moiety includes an alkylene glycol-based compound-derived moiety, the phosphorus-based heat stabilizer includes an ester group at the terminal end thereof, and the complementary colorant includes a blue dye and a red dye.

The polyester resin of an embodiment may be prepared through a series of processes for producing a polyester resin by esterifying, pre-polymerizing, and poly-condensing a diacid component including an aromatic dicarboxylic acid and a diol component including an aliphatic diol.

The furan dicarboxylic acid-based compound is derived from eco-friendly raw materials prepared from biomass such as wood and corn, and can be completely decomposed (i.e., biodegraded) by microorganisms under certain conditions.

Accordingly, if the furan dicarboxylic acid-based compound is used instead of terephthalic acid as a raw material for polyester resin, depletion of crude oil resources can be prevented. In addition, the polyester resin prepared using the furan dicarboxylic acid compound as a raw material exhibits biodegradability and can contribute to preventing environmental pollution and climate change.

However, the furan dicarboxylic acid-based compound has low thermal stability, and polyester resins prepared using it generally exhibit low brightness due to yellowing or browning.

However, although the polyester resin of the embodiment is prepared using the furan dicarboxylic acid-based compound as a raw material, yellowing or browning is suppressed and it can exhibit relatively high brightness.

The color characteristics exhibited by the polyester resin of the above embodiment may be due to additives supplied during the preparing process.

Specifically, the polyester resin of an embodiment may be prepared in the presence of a phosphorus-based heat stabilizer including an ester group at the terminal end. Among heat stabilizers, phosphorus-based heat stabilizers containing an ester group at the terminal can minimize heat discoloration during the preparing process of polyester resin.

Additionally, the polyester resin of the above embodiment may be prepared in the presence of a complementary colorant including a blue dye and a red dye. Among complementary colorants, complementary colorants including blue dye and red dye can correct the color of the polyester resin even if discoloration has already occurred during the preparing process. Complementary colorants containing the blue dye and red dye can also serve as a catalyst during the preparing process of polyester resin, improving the reaction rate and shortening the heat exposure time of the polyester resin.

On the other hand, the phosphorus-based heat stabilizer including an ester group at the terminal end; and the complementary colorant including the blue dye and the red dye, except for the amount that is partially lost during the

process of preparing the polyester resin of an embodiment, remains in most of the initially added amount. Accordingly, the polyester resin of the embodiment includes a phosphorus-based heat stabilizer including an ester group at the terminal end; and the blue dye and red dye.

Overall, the polyester resin of the above-described embodiment is biodegradable and can exhibit high brightness by inhibiting thermal discoloration and complementary coloring during the preparing process.

Hereinafter, the polyester resin of an embodiment will be described in detail.

Phosphorus-based heat stabilizer including an ester group at the terminal end

Non-phosphorus heat stabilizers that do not include an ester group at the terminal end, such as triphenyl phosphate or phosphoric acid as well as phosphorus heat stabilizers have weakness of slowing down the polymerization reaction rate.

On the other hand, the phosphorus-based heat stabilizer including an ester group at the terminal end has the advantage of minimizing thermal discoloration during the process of preparing the polyester resin of an embodiment while enabling appropriate control of the polymerization reaction rate.

The phosphorus-based heat stabilizer including an ester group at the terminal end may be represented by Chemical Formula 1:

[Chemical Formula 1]

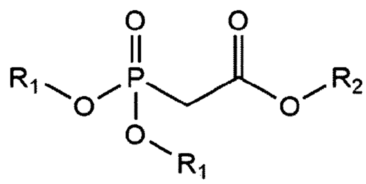

In Chemical Formula 1, $R_1$s are the same or different and is a substituted or unsubstituted $C_{1-10}$ alkyl; and $R_2$ is substituted or unsubstituted $C_{1-10}$ alkyl.

Specifically, the phosphorus-based heat stabilizer including an ester group at the terminal end may be trimethyl phosphonoacetate, triethyl phosphonoacetate, or a combination thereof.

For example, the phosphorus-based heat stabilizer including an ester group at the terminal end may be triethyl phosphonoacetate, as described in examples below.

The polyester resin of an embodiment may include 1 to 50 ppm of the heat stabilizer including the ester group at the terminal end, based on a weight of the copolymer. Within this range, thermal discoloration of the polyester resin can be minimized.

Specifically, 1 g of the polyester resin of an embodiment is frozen under liquid nitrogen for 10 minutes and then pulverized, 100 ml of normal hexane is added per 1 g of the pulverized polyester resin, and Soxhlet extraction is performed for 6 hours to concentrate or dilute to a final volume of 50 to 250 ml, 10 to 50 μg of Fluoranthene-d10 as an internal standard material is added, GC/MS analysis is performed, and the remaining amount of the heat stabilizer in the polyester resin of an embodiment is confirmed by calculating a relative ratio compared to the internal standard material.

For example, the heat stabilizer including the ester group at the terminal end may be in a range of 1 ppm or more, 5 ppm or more, 10 ppm or more, or 15 ppm or more, and 50 ppm or less, 40 ppm or less, 30 ppm or less, or 25 ppm or less based on the weight of the polyester resin of the embodiment.

Complementary Colorant

The complementary color agent is a material that corrects the color of the resin that is thermally discolored during the process of preparing the polyester resin of the embodiment and acts as a catalyst, and may include a blue dye and a red dye.

In the case of the blue dye, there is no particular limitation as long as it is a dye showing a blue color, but it may be an anthraquinone-based blue dye, a phthalocyanine-based blue dye, or a combination thereof.

For example, as an anthraquinone blue dye, 3,3'-[(9,10-dihydro-9,10-dioxo-1,4-anthrylene)diimino]bis[N-cyclohexyl-2,4,6-trimethylbenzenesulphonamide] represented by Chemical Formula 2-1 (Product name: Solvent Blue 45, CAS NO.23552-74-1) can be used:

[Chemical Formula 2-1]

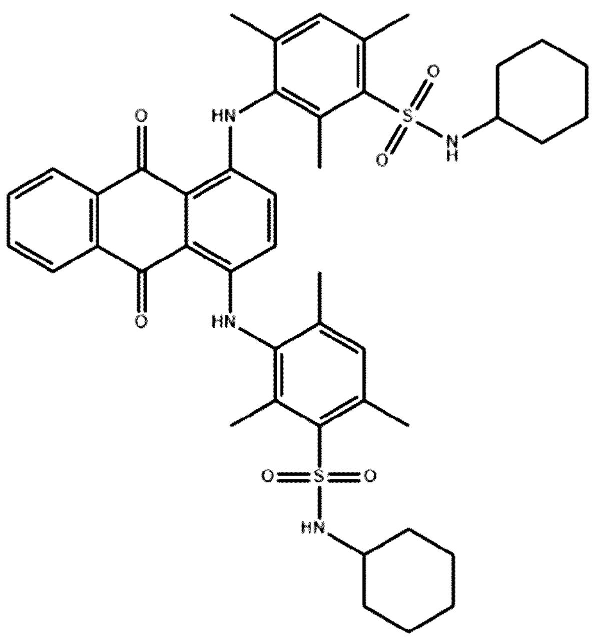

In the case of the red dye, there is no particular limitation as long as it is a dye showing a red color, but it may be a perinone-based red dye, an azo-based red dye, or a combination thereof.

For example, as a perrinone-based red dye, 8,9,10,11-tetrachloro-12H-isoindolo[2,1-a]perimidin-12-one represented by Chemical Formula 3-1 (product name: Solvent Red 135, CAS No. 20749-68-2) can be used:

[Chemical Formula 3-1]

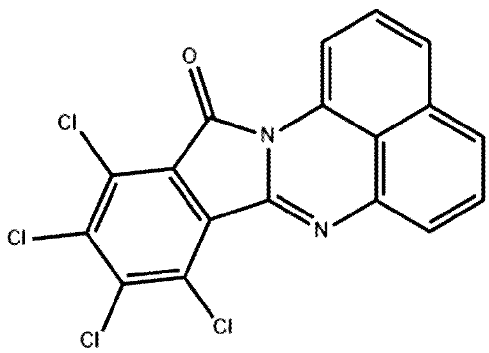

The polyester resin of an embodiment may include 1 to 150 ppm of the blue dye and 1 to 100 ppm of the red dye, based on a weight of the copolymer.

Herein, 1 g of the polyester resin is frozen under liquid nitrogen for 10 minutes and then pulverized, 100 ml of normal hexane is added per 1 g of the pulverized polyester resin, and Soxhlet extraction is performed for 6 hours to concentrate or dilute to a final volume of 50 to 250 ml, 10 to 50 μg of fluoranthene-d10 is added as an internal standard material, GC/MS analysis is performed, and remaining amounts of the blue dye and the red dye in the polyester resin are calculated as a relative ratio compared to the internal standard material.

Specifically, the polyester resin of an embodiment includes the blue dye in an amount of 1 ppm or more, 2 ppm or more, 5 ppm or more, or 10 ppm or more, and 150 ppm or less, 140 ppm or less, 130 ppm or less, 120 ppm or less, or 100 ppm or less, based on a weight of the copolymer.

As the content of the blue dye increases in the above range, in the polyester resin of the above embodiment, the L* value may decrease, the a* value may be substantially the same or less, and the b* value may increase according to the CIE1976 L*a*b* color system.

In addition, the polyester resin of an embodiment includes the red dye in an amount of 1 ppm or more, 10 ppm

or more, 20 ppm or more, or 30 ppm or more, and 100 ppm or less, 80 ppm or less, 70 ppm or less, 60 ppm or less, or 50 ppm or less based on the weight of the copolymer.

As the content of the red dye increases in the above range, in the polyester resin of the above embodiment, the L* value may decrease, the b* value may be substantially the same or less, and the a* value may increase according to the CIE1976 L*a*b* color system.

Depending on the purpose, the final content (remaining amount) of each dye and the color characteristics of the resin can be controlled by adjusting the input amount of each dye during the process of preparing the polyester resin of the embodiment.

The complementary color agent may include the blue dye and the red dye in a weight ratio (blue:red) of 1:9 to 9:1 or 1:4 to 4:1.

In this way, when using a mixture of blue dye and red dye, the color of yellowed or browned polyester resin can be effectively corrected and its brightness can be increased.

Copolymer

The copolymer includes a moiety derived from a furan dicarboxylic acid-based compound (hereinafter referred to as 'a furan dicarboxylic acid-based compound-derived moiety') as the diacid moiety, and exhibits excellent biodegradability due to the furan dicarboxylic acid-based compound.

The furan dicarboxylic acid-based compound may be represented by Chemical Formula 1:

[Chemical Formula 1]

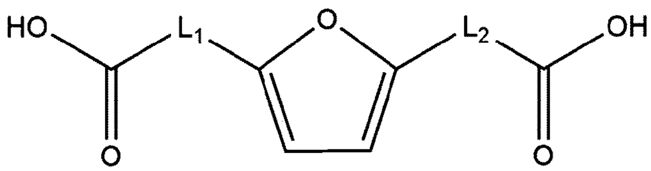

In Chemical Formula 1, $L_1$ and $L_2$ are each independently a single bond or a substituted or unsubstituted C1 to C10 alkylene.

For example, the furan dicarboxylic acid-based compound may be 2,5-furandicarboxylic acid, and in this case, both $L_1$ and $L_2$ of Chemical Formula 1 may be single bonds.

The furan dicarboxylic acid-based compound-derived moiety may be represented by Chemical Formula 1-1:

[Chemical Formula 1-1]

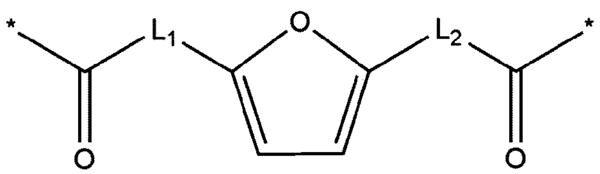

In Chemical Formula 1-1, $L_1$ and $L_2$ are each independently a single bond or a substituted or unsubstituted C1 to C10 alkylene; and * indicates a bonding position.

For example, when the furan dicarboxylic acid-based compound is 2,5-furan dicarboxylic acid, both $L_1$ and $L_2$ of Chemical Formula 1-1 may be single bonds.

The copolymer includes, among the diacid moieties, a moiety derived from an alkylene glycol-based compound (hereinafter referred to as 'alkylene glycol-based compound-derived moiety'), and has excellent compatibility and elongation due to the alkylene glycol-based compound-derived moiety.

The alkylene glycol-based compound may be represented by Chemical Formula 2:

[Chemical Formula 2]

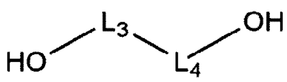

In Chemical Formula 2, $L_3$ and $L_4$ are each independently a substituted or unsubstituted $C_{1-10}$ alkylene.

For example, the alkylene glycol-based compound may be ethylene glycol or 1,4-butanediol. In this case, $L_3$ in Chemical Formula 2 may be C1 alkylene (i.e., methylene), and $R_4$ may be C1 alkylene (i.e., methylene) or C3 alkylene (i.e., propylene).

The alkylene glycol-based compound-derived moiety may be represented by the following formula 2-1:

[Chemical Formula 2-1]

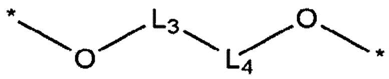

In Chemical Formula 2-1, $R_3$ and $R_4$ are each independently a substituted or unsubstituted $C_{1-10}$ alkylene; and * indicates a bonding position.

For example, when the alkylene glycol-based compound is ethylene glycol or 1,4-butanediol, in Chemical Formula 2-1, $R_3$ is C1 alkylene (i.e., methylene), and $R_4$ is C1 alkylene (i.e., methylene) or C3 alkyllene (i.e. propylene).

A molar ratio of the furandicarboxylic acid-based compound-derived moiety and the alkylene glycol-based compound-derived moiety in the copolymer is 9:1 to 1:9, 8:2 to 2:8, or 1:1 to 1:2. Within this range, the effects of the furandicarboxylic acid-based compound-derived moiety and the alkylene glycol-based compound-derived moiety can be realized in harmony.

The copolymer may further include at least one of a diacid moiety and a diol moiety in addition to the furandicarboxylic acid-based compound-derived moiety and the alkylene glycol-based compound-derived moiety.

The diacid moiety as the additional moiety may be derived from an aromatic dicarboxylic acid, an aliphatic dicarboxylic acid, or a mixture thereof excluding the furan dicarboxylic acid-based compound. Additionally, the diol moiety as the additional moiety may be derived from aromatic diol, aliphatic diol, or a mixture thereof.

Of the total 100 mol% of the polyester resin including the additional moiety, the content of the additional moiety can be controlled to 1 to 20 mol%. When the additional moiety is included in this range, the mechanical properties and heat resistance of the polyester resin may be further improved.

The copolymer may be a random copolymer or a block copolymer. Specifically, the copolymer does not include the additional moiety and may be represented by Chemical Formula 4:

[Chemical Formula 4]

/

In Chemical Formula 4, the definition of each substituent is as described above.

For example, the copolymer may be represented by Chemical Formula 4-1:

[Chemical Formula 4-1]

/

Specifically, in the copolymer represented by Chemical Formula 4-1, the furandicarboxylic acid-based compound-derived moiety is a moiety derived from furan dicarboxylic acid, the ethylene glycol-based compound-derived moiety is a moiety derived from ethylene glycol, and the molar ratio of the glycol-derived moiety and the ethylene glycol-derived moiety is 1:1, it corresponds to polyethylene furandicarboxylate) (PEF).

<u>Number average molecular weight (Mn) and molecular weight distribution (MWD) of polyester resin</u>

The polyester resin has a number average molecular weight (Mn) of 20,000 g/mol or more, 21,000 g/mol or more, 22,000 g/mol or more, 23,000 g/mol or more, 24,000 g/mol or more, or 25,000 g/mol or more, and 30,000 g/mol or less, 29,000 g/mol or less, or 27,000 g/mol or less.

If the number average molecular weight of the polyester resin is less than 20,000 g/mol, not only is it difficult to process it into a film for use as a packaging material, but the desired modulus may not be achieved. On the other hand, if it exceeds 30,000 g/mol, the viscosity may increase and productivity and yield may decrease.

The polyester resin has a ratio of weight average molecular weight (Mw)/number average molecular weight

(Mn), that is, molecular weight distribution (MWD), of 1 or more, 1.2 or more, 1.4 or more, or 1.5 or more, and 2.5 or less, 2 or less, 1.9 or less, or 1.8 or less.

If the molecular weight distribution of the polyester resin is less than 1, process control is difficult, the defect rate increases, and process costs increase. On the other hand, if the molecular weight distribution of the polyester resin of the above embodiment exceeds 2.5, defects may occur during product manufacturing due to non-uniform molecular weight distribution.

Color Characteristics of Polyester Resin

The polyester resin of the above embodiment may have an L* value of 92 or more to 97 or less, an a* value of 2 or less, and a b* value of 3 or less according to the CIE1976 L*a*b* color system.

Color characteristics according to the CIE1976 L*a*b* color system may be measured in a solution state by dissolving a chip at a specific concentration in a specific solvent, rather than using a commonly known chip colorimeter. Specifically, 2 g of the polyester resin can be dissolved in 20 ml of hexafluoroisopropanol (HFIP) solvent at a concentration of 0.1 g/ml, and then measured using a solution colorimeter according to the CIE1976 L*a*b* color system.

The a* value of 2 or less and the b* value of 3 or less mean that heat degeneration of yellowing or browning is suppressed, and the L* value of 92 or more to 97 or less means high brightness.

Specifically, the higher the L* value is in the range of 92 or more, the closer the color to white can be displayed. However, depending on the use, purpose, etc. of the product to which the polyester resin of the embodiment is applied, the brightness can be controlled within the range of the L* value of 92 or more, 92.5 or more, or 93 or more, and 97 or less or 96 or less.

In the case of the a* value, as the value becomes smaller in the range of 2 or less, red may become lighter and green may become darker. However, depending on the use, purpose, etc. of the product to which the polyester resin of the embodiment is applied, the degrees of red and green can be controlled within the range of the a* value of 2 or less, 1.6 or less, 1.2 or less, or 1 or less, and -3 or more, -2.5 or more, -2 or more, or -1 or more,.

In the case of the b* value, as the value becomes smaller in the range of 3 or less, the yellow color becomes lighter and the blue color becomes darker. However, depending on the use, purpose, etc. of the product to which the polyester resin of the embodiment is applied, the degrees of yellow and blue can be controlled within the range of the b* value of 3 or less, 2.7 or less, 2.5 or less, or 2 or less, and -5 or more, -4 or more, -3 or more, - 2 or more, or -1 or more.

A more detailed description will be provided later, but the color characteristics of the polyester resin of the embodiment can be adjusted by the phosphorus-based heat stabilizer including an ester group at the terminal end during the manufacturing process; and the complementary colorant including the blue dye and the red dye.

Physical Properties of Polyester

The polyester resin of an embodiment may have a change in intrinsic viscosity ($\triangle IV_{12}$) of 0.15 (but greater than 0) dl/g according to Equation 1.

[Equation 1]

$$\triangle IV_{12} = IV_1 - IV_2$$

In Equation 1, $IV_1$ is an intrinsic viscosity at 25 °C, and $IV_2$ is an intrinsic viscosity at 35 °C.

If the change in intrinsic viscosity ($\triangle IV_{12}$) according to Equation 1 is less than the lower limit, not only is it difficult to process it into a film for use as a packaging material, but the desired modulus may not be achieved. On the other hand, if the upper limit is exceeded, the viscosity may increase and productivity and yield may decrease.

Specifically, the polyester resin of the embodiment has a change in intrinsic viscosity ($\triangle IV_{12}$) according to Equation 1 of 0.05 dl/g or more, 0.1 dl/g or 0.14 dl/g or more, and 0.4 dl/g or less, 0.3 dl/g or less, 0.2 dl/g or less, or 0.15 dl/g or less.

In addition, the polyester resin of the above embodiment has an intrinsic viscosity at 25 °C of 0.1 to 2 dl/g, specifically 0.2 to 1.5 dl/g, more specifically 0.4 to 1 dl/g, for example 0.6 to 0.8 dl/g.

In addition, the polyester resin of the embodiment has an intrinsic viscosity at 35 °C of 0.1 to 2 dl/g, specifically 0.2 to 1.5 dl/g, more specifically 0.3 to 1 dl/g, for example 0.4 to 0.6 dl/g.

If the intrinsic viscosity measured at each temperature is less than the lower limit, not only is it difficult to process it into a film for use as a packaging material, but the desired modulus may not be achieved. On the other hand, if the upper limit is exceeded, the viscosity may increase and productivity and yield may decrease.

The polyester resin may have a glass transition temperature (Tg) of 50 to 100 °C, specifically 70 to 95 °C, for

example 80 to 90 °C.

If the glass transition temperature is less than 50 °C, it cannot have physical properties or thermal stability at room temperature, and there may be limitations in the film processing process of polyester resin for use as a packaging material. On the other hand, for the glass transition temperature to exceed 100 °C, the density of the molecular structure must be high, and in this case, the crystallinity of the polyester resin also increases, which may reduce transparency.

**(Method of Preparing Polyester Resin)**

In another embodiment of the present invention, a method of preparing a polyester resin includes esterifying a monomer mixture including a diacid component and a diol component; pre-polymerizing a esterification reaction product in the presence of a phosphorus-based heat stabilizer and a complementary colorant; and subjecting the pre-polymerized polymer to a poly-condensation reaction, wherein the diacid component includes a furan dicarboxylic acid-based compound, the diol component includes an alkylene glycol-based compound, the phosphorus-based heat stabilizer includes an ester group at the terminal end thereof, and the complementary colorant includes a blue dye and a red dye.

The phosphorus-based heat stabilizer including an ester group at the terminal end may minimize thermal discoloration during the process of preparing a polyester resin, and even if already discolored, the complementary colorant including a blue dye and a red dye may correct a color of the polyester resin. In addition, the complementary colorant including a blue dye and a red dye may also act as a catalyst during the process of preparing a polyester resin to improve a reaction rate and shorten time that the polyester resin is exposed to heat.

Accordingly, according to the preparing method of an embodiment, the polyester resin of an embodiment described above can be obtained.

Hereinafter, descriptions that overlap with the above-described content will be omitted, and each step of the preparing method will be described in detail.

Esterification Reaction

First, in the preparing method according to an embodiment, the monomer mixture including a diacid component and a diol component is subjected to an esterification reaction. In this step, an oligomer with a low polymerization degree may be formed.

Specific components constituting each of the diacid component and the diol component are the same as described above.

In the esterification reaction step, the monomer mixture may include 100 to 200 moles of the an alkylene glycol-based compound based on 100 moles of the furandicarboxylic acid-based compound.

If the alkylene glycol-based compound is used in an amount of greater than 200 moles of based on 100 moles of the furandicarboxylic acid-based compound, in the poly-condensation reaction, a viscosity increase rate may slow down, and a polymer may be discolored. On the contrary, if the alkylene glycol-based compound is used in an amount of less than 100 moles, a clear point may not be determined, making it impossible to determine an end point of the ester reaction.

On the other hand, considering an amount of the material lost or unreacted during the esterification reaction, it may be used in an amount exceeding about 120% of a desired copolymer composition. Accordingly, if a molar ratio of the reactant is controlled within the range, a copolymer may be formed to have a content of each moiety controlled within the above range.

Specifically, based on 100 moles of the furandicarboxylic acid-based compound, the alkylene glycol-based compound may be included in an amount of greater than or equal to 100 moles, greater than or equal to 110 moles, greater than or equal to 115 moles, or greater than or equal to 120 moles and less than or equal to 200 moles, less than or equal to 190 moles, less than or equal to 180 moles, or less than or equal to 150 moles.

The esterification reaction may be performed under a nitrogen ($N_2$) atmosphere within a temperature range of 180 to 220 °C at a pressure of 1 to 5.5 atm for 1 to 5 hours.

The esterification reaction conditions may be appropriately adjusted depending on a mixing ratio, characteristics of a desired polyester composition, etc.

For example, the esterification reaction may be performed at greater than equal to 180 °C, greater than equal to 182 °C, greater than equal to 184 °C, or greater than equal to 185 °C and less than equal to 220 °C, less than equal to 210 °C, less than equal to 200 °C, or less than equal to 195 °C.

The esterification reaction may be performed at a pressure of greater than equal to 1 atm and less than equal to 5.5 atm, less than equal to 5 atm, less than equal to 3 atm, or less than equal to 1.5 atm.

The esterification reaction may be performed for greater than equal to 1 hour, greater than equal to 1.5 hours, or greater than equal to 2 hours and less than equal to 5 hours, less than equal to 4 hours, or less than equal to 3 hours.

If the temperature, pressure, and reaction time of the esterification reaction is less than each of the ranges,

there may be a low reaction yield or no sufficient reaction, deteriorating properties of the finally prepared polyester. If the temperature, pressure, and reaction time of the esterification reaction is performed greater than each of the ranges, the prepared polyester may appear yellowish, or a depolymerization reaction may proceed, failing in synthesizing a polyester resin in the preparing method.

The esterification exchange reaction may be performed in a batch or continuous manner, wherein each raw material may be separately introduced but introduced, for example, in the form of a slurry of mixing furan-based dicarboxylic acid in the alkylene glycol.

The esterification reaction may be performed under an esterification reaction catalyst including a titanium (Ti)-based compound, a tin (Sn)-based compound, an antimony (Sb)-based compound, etc. In particular, the esterification reaction catalyst may improve a reaction rate from the beginning of the reaction and shorten reaction time that the polyester resin is exposed to heat.

For example, the tin (Sn)-based compound may be dibutyltin oxide.

The esterification reaction catalyst may be used in an amount of 1 ppm to 100 ppm based on central atoms of the synthesized polyester. If the content of the esterification reaction catalyst is too small, efficiency of the esterification reaction may not be greatly improved, and an amount of a reactant not participating in the reaction may be greatly increased. In addition, if the content of the esterification reaction catalyst is too large, appearance properties of the polyester may be deteriorated.

Meanwhile, the monomer mixture may further include, in addition to the furan-based dicarboxylic acid and the alkylene glycol, one or more of the diacid component and the diol component.

When the monomer mixture further includes the diacid component, a polyester resin including the above-described diacid moiety may be formed. Additionally, when the diol component is additionally included in the monomer mixture, a polyester resin including the above-described diol moiety may be formed.

The diol component may include aromatic diol and aliphatic diol.

The aromatic diol may include an aromatic diol compound with a carbon number of 8 to 40, for example, a carbon number of 8 to 33. Examples of such aromatic diol compounds may include polyoxyethylene-(3.0)-2,2-bis(4-bisphenol A derivatives to which ethylene oxide and/or propylene oxide are added, such as polyoxyethylene-(2.0)-2,2-bis(4-hydroxyphenyl)propane, polyoxypropylene-(2.0)-2,2-bis(4-hydroxyphenyl)propane, polyoxypropylene-(2.2)-polyoxyethylene-(2.0)-2,2-bis(4-hydroxyphenyl)propane, polyoxyethylene-(2.3)-2,2-bis(4-hydroxyphenyl)propane, polyoxypropylene-(6)-2,2-bis(4-hydroxyphenyl)propane, polyoxypropylene-(2.3)-2,2-bis(4-hydroxyphenyl)propane, polyoxypropylene-(2.4)-2,2-bis(4-hydroxyphenyl)propane, polyoxypropylene-(3.3)-2,2-bis(4-hydroxyphenyl)propane, hydroxyphenyl)propane, and polyoxyethylene-(6)-2,2-bis(4-hydroxyphenyl)propane (polyoxyethylene-(n)-2,2-bis(4-hydroxyphenyl)propane, polyoxypropylene-(n)-2,2-bis(4-hydroxyphenyl)propane or polyoxypropylene-(n)-polyoxyethylene-(n)-2,2-bis(4-hydroxyphenyl)propane, etc.). The n refers to the number of polyoxyethylene or polyoxypropylene units.

The aliphatic diol may include an aliphatic diol compound having 2 to 20 carbon atoms, for example, 2 to 12 carbon atoms. Examples of such an aliphatic diol compound may include linear, branched, or cyclic aliphatic diol components such as ethylene glycol, diethylene glycol, triethylene glycol, propanediol (1,2-propanediol, 1,3-propanediol, etc.), 1,4-butanediol, pentanediol, hexanediol (1,6-hexanediol, etc.), neopentyl glycol (2,2-dimethyl-1,3-propanediol), 1,2-cyclohexanediol, 1,4-cyclohexanediol, 1,2-cyclohexanediol methanol, 1,3-cyclohexanedimethanol, 1,4-cyclohexanedimethanol, and tetramethylcyclobutanediol.

The aromatic dicarboxylic acid component may be an aromatic dicarboxylic acid having 8 to 20 carbon atoms, preferably an aromatic dicarboxylic acid having 8 to 14 carbon atoms, or a mixture thereof. Examples of the aromatic dicarboxylic acid may include isophthalic acid, naphthalenedicarboxylic acid such as 2,6-naphthalenedicarboxylic acid, diphenyl dicarboxylic acid, 4,4'-stilbendicarboxylic acid, 2,5-furandicarboxylic acid, 2,5-thiophenedicarboxylic acid, etc.

Pre-polymerization

The preparing method according to an embodiment may provide an oligomer with a higher polymerization degree than the esterification reaction product by pre-polymerizing the esterification reaction product under the presence of the phosphorus-based heat stabilizer including an ester group at the terminal end; and the complementary colorant including a blue dye and a red dye.

Specifically, as the diacid component and the diol component react each other and generate water, the diacid component is all dissolved therein and reaches a clear point, at which the esterification reaction is completed. If the phosphorus-based heat stabilizer including an ester group at the terminal end; and the complementary colorant including a blue dye and a red dye are introduced to the esterification reaction step, because it may be difficult to determine an exact clear point, in the preparing method accroding to an embodiment, the additives are introduced into pre-polymerization step.

During the pre-polymerization, based on a weight of the esterification reaction product, the heat stabilizer is used at 1 to 50 ppm, the blue dye is used at 1 to 150 ppm, and the red dye is used at 1 to 100 ppm.

When the heat stabilizer is used in the above range, thermal discoloration during the pre-polymerization and poly-condensation reactions can be minimized. In addition, the complementary colorant, if used within the ranges, may not only color-correct a discolored resin during the pre-polymerization and poly-condensation reaction but also effectively serve as a catalyst of the poly-condensation reaction to minimize thermal exposure.

In addition, if each of the ranges is satisfied, a polyester resin in which the heat stabilizer and the complementary colorant may remain within the above ranges may be obtained,

For example, the phosphorus-based heat stabilizer including an ester group at the terminal end may be used within a range of greater than or equal to 1 ppm, greater than or equal to 5 ppm, greater than or equal to 10 ppm, or greater than or equal to 15 ppm and less than or equal to 50 ppm, less than or equal to 40 ppm, less than or equal to 30 ppm, or less than or equal to 25 ppm based on a weight of the esterification reaction product.

In addition, the blue dye may be used within a range of greater than or equal to 1 ppm, greater than or equal to 2 ppm, greater than or equal to 5 ppm, or greater than or equal to 10 ppm and less than or equal to 150 ppm, less than or equal to 140 ppm, less than or equal to 130 ppm, less than or equal to 120 ppm, or less than or equal to 100 ppm based on the weight of the esterification reaction products.

In addition, the red dye may be used within a range of greater than or equal to 1 ppm, greater than or equal to 10 ppm, greater than or equal to 20 ppm, or greater than or equal to 30 ppm and less than or equal to 100 ppm, less than or equal to 80 ppm, less than or equal to 70 ppm, less than or equal to 60 ppm, or less than or equal to 50 ppm based on the weight of the esterification reaction product.

The pre-polymerization may be performed under temperature-controlled conditions (thermal pre-condensation).

Specifically, the pre-polymerization may include increasing a temperature until it reaches a temperature range of 220 to 280 °C or 220 to 260 °C; and maintaining the increased temperature and pre-polymerizing the esterification reaction product.

In addition, when the temperature is increased, the pressure can be reduced until it reaches 0 to 1 atm or 0 to 0.5 atm, and then the increased pressure can also be maintained when the increased temperature is maintained.

The pre-polymerization conditions may be appropriately adjusted depending on a mixing ratio, each amount of the heat stabilizer and the complementary colorant, specific characteristics of a desired polyester composition, etc.

If the temperature, pressure, reaction time, etc. reached during the pre-polymerization is less than each of the ranges, there may be a low reaction yield or no sufficient reaction, resultantly deteriorating properties of the finally prepared polyester. If the temperature, pressure, reaction time, etc. reached during the pre-polymerization is greater than each of the ranges, the prepared polyester may appear yellowish, or a depolymerization reaction may proceed, failing in synthesizing a polyester resin in the preparing method.

Polycondensation Reaction

In the above preparing method, after the pre-polymerization, the pre-polymerized polymer is subjected to a poly-condensation reaction.

The poly-condensation reaction is performed at a temperature range of 220 to 280 °C or 220 to 260 °C; and under a pressure of 1 torr or less or 0.4 to 0.8 torr or less for 2 to 6 hours.

If the temperature, pressure, reaction time, etc. during the poly-condensation is less than each of the ranges, because glycol, a by-product of the poly-condensation reaction, may not be effectively removed out of the system, a final reaction product may have low intrinsic viscosity, deteriorating properties of the prepared polyester. On the contrary, if the temperature, pressure, reaction time, etc. during the poly-condensation is greater than each of the ranges, the manufactured polyester may appear yellowish, or a depolymerization reaction may proceed, failing in synthesizing polyester.

During the poly-condensation, a poly-condensation reaction catalyst can be used.

The poly-condensation catalyst may be added to the product of the esterification reaction before the start of the poly-condensation reaction, may be added to a mixture including the diol component and the dicarboxylic acid component before the esterification reaction, and may also be added during the esterification reaction step.

As the poly-condensation catalyst, titanium-based compound, germanium-based compound, antimony-based compound, aluminum-based compound, tin-based compound or mixture thereof can be used.

The titanium-based compound may include tetraethyl titanate, acetyltripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethyl acetoacetic ester titanate, isostearyl titanate, titanium dioxide, a titanium dioxide/silicon dioxide copolymer, a titanium dioxide/zirconium dioxide copolymer, etc.

The germanium-based compounds may include germanium dioxide ($GeO_2$), germanium tetrachloride ($GeCl_4$), germanium ethyleneglycoxide, germanium acetate, copolymers using these, and mixtures thereof. etc.

## [Mode for Invention]

Hereinafter, the present invention will be described with reference to examples. However, the following examples are intended to illustrate the present invention, and the scope of the present invention is not limited to these only.

### Example 1-1

Into the 2L capacity autoclave reactor hopper, 5.5 mol of 2,5-furandicarboxylic acid (FDCA) and 9.9 mol of ethylene glycol (EG) are added. Subsequently, dibutyltin oxide, a type of tin-based catalyst, was added in an amount of 50 ppm based on tin to proceed with an esterification reaction of the FDCA and EG at a temperature of 190 °C and normal pressure (1 atm) in a nitrogen atmosphere for 2 to 3 hours. According to this reaction, an oligomer composed of a FDCA-derived moiety and an EG-derived moiety is produced.

After completing the esterification reaction, a PC64 catalyst (Tyzor@ PC64), a type of titanium chelate-based catalyst, as a poly-condensation catalyst was added thereto in an amount of 100 ppm based on tin, and 20 ppm of triethyl phosphonoacetate (TEPA) as a heat stabilizer was added thereto. After adding the poly-condensation catalyst and the heat stabilizer, the obtained mixture was stirred for 30 minutes, and 100 ppm of Solvent Blue 45 dye as a blue dye and 30 ppm of Solvent Red 135 as a red dye were added thereto. After stirring for an additional 15 minutes and increasing the temperature inside the reactor for 1 hour to reach a temperature range of 220 to 240 °C, pre-polymerization is performed while gradually lowering the pressure over 1 hour using a vacuum pump so that the pressure inside the reactor reaches 0 atm from 1 atm.

Subsequently, while the reaction proceeds within a temperature range of 220 to 240 °C under a high vacuum of 0.8 torr or less for 2 hours to 6 hours, when a load transmitted to a torque meter of an autoclave reaches a desired level, a polyester resin of Example 1-1 is obtained by draining.

### Examples 1-2, 1-3, and 1-5

Each polyester resin of Examples 1-2, 1-3, and 1-5 was prepared in the same process as in Example 1-1 except that the amount of Solvent Blue 45 was changed. Herein, the amount of Solvent Blue 45 was changed as shown in Table 1.

### Examples 1-4 and 1-6

Each polyester resin of Examples 1-4 and 1-6 was prepared in the same process as in Example 1-1 except that the amounts of Solvent Blue 45 and Solvent Red 135 were changed. Herein, the amounts of Solvent Blue 45 and Solvent Red 135 were respectively changed as shown in Table 1.

### Example 2-1

Into the 2L capacity autoclave reactor hopper, 5.5 mol of 2,5-furandicarboxylic acid (FDCA) and 9.9 mol of ethylene glycol (EG) are added. Subsequently, dibutyltin oxide, a type of tin-based catalyst, was added in an amount of 50 ppm based on tin to proceed with an esterification reaction of the FDCA and EG at a temperature of 190 °C and normal pressure (1 atm) in a nitrogen atmosphere for 2 to 3 hours. According to this reaction, an oligomer composed of a FDCA-derived moiety and a EG-derived moiety is produced.

After completion of the esterification reaction, PC64 catalyst (Tyzor@PC64), a type of titanium chelate-based catalyst, was added as a poly-condensation catalyst in an amount of 100 ppm based on tin, and triethyl phosphonoacetate (TEPA), a heat stabilizer, was added at a concentration of 20 ppm. The poly-condensation catalyst and the heat stabilizer are added, stirred for 30 minutes and 100 ppm of Global PRT Blue dye and 30 ppm of Global PRT Red dye are added. After stirring for an additional 15 minutes and increasing the temperature inside the reactor for 1 hour to reach a temperature range of 220 to 240 °C, pre-polymerization is performed while gradually lowering the pressure over 1 hour using a vacuum pump so that the pressure inside the reactor reaches 0 atm from 1 atm.

Subsequently, while the reaction proceeds within a temperature range of 220 to 240 °C under a high vacuum of 0.8 torr or less for 2 hours to 6 hours, when a load transmitted to a torque meter of an autoclave reaches a desired level, a polyester resin of Example 2-1 is obtained by draining.

### Examples 2-2, 2-3, and 2-5

Each polyester resin of Examples 2-2, 2-3, and 2-5 was prepared in the same process as in Example 2-1 except that the amount of Global PRT Blue was changed. Herein, the content of Global PRT Blue was changed as shown in Table 1.

**Examples 2-4 and 2-6**

Each polyester resin of Examples 2-4 and 2-6 was prepared in the same process as in Example 1-1 except that the amounts of Global PRT Blue and Global PRT Red were changed. Herein, the amounts of Global PRT Blue and Global PRT Red were changed as shown in Table 1.

**Comparative Example 1-1**

A polyester resin of Comparative Example 1-1 was prepared in the same process as in Example 1-1 except that the heat stabilizer, the blue dye, and the red dye all were not used.

**Comparative Example 2-1**

The blue dye and the red dye were not added, and triphenyl phosphate (TPP) was added instead of the triethyl phosphonoacetate (TEPA) as a heat stabilizer, wherein the triphenyl phosphate was added in an amount shown in Table 1.
Except for this, a polyester resin of Comparative Example 2-1 was prepared in the same process as in Example 1-1.

**Comparative Example 2-2**

The blue dye and the red dye were not added, and phosphoric acid (PA) was used instead of the triethyl phosphonoacetate (TEPA) as a heat stabilizer, wherein the phosphoric acid (PA) was added in an amount shown in Table 1.
Except for this, a polyester resin of Comparative Example 2-2 was prepared in the same process as in Example 1-1.

**Comparative Example 2-3**

The blue dye and the red dye were not added, and the triethyl phosphonoacetate (TEPA) was added as a heat stabilizer, wherein the triethyl phosphonoacetate (TEPA) was added in an amount shown in Table 1.
Except for this, a polyester resin of Comparative Example 2-3 was prepared in the same process as in Example 1-1.

**Comparative Example 3-1**

The heat stabilizer and the red dye were not added, and Solvent Blue 45, a blue dye, was added, wherein Solvent Blue 45 was added in an amount shown in Table 1.
Except for this, a polyester resin of Comparative Example 3-1 was prepared in the same process as in Example 1-1.

**Comparative Example 3-2**

The heat stabilizer and the red dye were not added, and Global PRT Blue, a blue dye, was added, wherein Global PRT Blue was added in an amount shown in Table 1.
Except for this, a polyester resin of Comparative Example 3-2 was prepared in the same process as in Example 1-1.

**Comparative Example 3-3**

The heat stabilizer and the red dye were not added, and Solvent Red 135, a red dye, was added, wherein Solvent Red 135 was added in an amount shown in Table 1.
Except for this, a polyester resin of Comparative Example 3-3 was prepared in the same process as in Example 1-1.

**Comparative Example 3-4**

The heat stabilizer and the blue dye were not added, but Global PRT Red, a red dye, was added, wherein an amount of Global PRT Red was changed as shown in Table 1.

Except for this, a polyester resin of Comparative Example 3-4 was prepared in the same process as in Example 1-1.

**Comparative Example 4-1**

The heat stabilizer and was not added, but Solvent Blue 45, a blue dye, was added, wherein each amount of Solvent Blue 45 and Solvent Red 135 was changed as shown in Table 1.
Except for this, a polyester resin of Comparative Example 4-1 was prepared in the same process as in Example 1-1.

**Comparative Example 4-2**

The heat stabilizer and was not added, but Global PRT Blue, a blue dye, and Global PRT Red, a red dye, were added, wherein each amount of Global PRT Blue and Global PRT Red was changed as shown in Table 1.
Except for this, a polyester resin of Comparative Example 4-2 was prepared in the same process as in Example 1-1.

(Table 1)

| | Types and amounts of additives | | | | | |
|---|---|---|---|---|---|---|
| | Heat stabilizer | | Blue dye | | Red dye | |
| | Type | Amount | Type | Amount | Type | Amount |
| Comparative Example 1-1 | - | - | - | - | - | - |
| Comparative Example 2-1 | TPP | 20 ppm | - | - | - | - |
| Comparative Example 2-2 | PA | 20 ppm | - | - | - | - |
| Comparative Example 2-3 | TEPA | 20 ppm | - | - | - | - |
| Comparative Example 2-4 | TEPA | 70 ppm | - | - | - | - |
| Comparative Example 3-1 | - | - | Solvent Blue 45 | 100 ppm | - | - |
| Comparative Example 3-2 | - | - | Global PRT Blue | 100 ppm | - | - |
| Comparative Example 3-3 | - | - | - | - | Solvent Red 135 | 30 ppm |
| Comparative Example 3-4 | - | - | - | - | Global PRT Red | 30 ppm |
| Comparative Example 4-1 | - | - | Solvent Blue 45 | 100 ppm | Solvent Red 135 | 30 ppm |
| Comparative Example 4-2 | - | - | Global PRT Blue | 100 ppm | Global PRT Red | 30 ppm |
| Example 1-1 | TEPA | 20 ppm | Solvent Blue 45 | 100 ppm | Solvent Red 135 | 30 ppm |
| Example 1-2 | TEPA | 20 ppm | Solvent Blue 45 | 50 ppm | Solvent Red 135 | 30 ppm |
| Example 1-3 | TEPA | 20 ppm | Solvent Blue 45 | 10 ppm | Solvent Red 135 | 30 ppm |
| Example 1-4 | TEPA | 20 ppm | Solvent Blue 45 | 50 ppm | Solvent Red 135 | 50 ppm |
| Example 1-5 | TEPA | 20 ppm | Solvent Blue 45 | 120 ppm | Solvent Red 135 | 30 ppm |
| Example 1-6 | TEPA | 20 ppm | Solvent Blue 45 | 50 ppm | Solvent Red 135 | 70 ppm |
| Example 2-1 | TEPA | 20 ppm | Global PRT Blue | 100 ppm | Global PRT Red | 30 ppm |
| Example 2-2 | TEPA | 20 ppm | Global PRT Blue | 50 ppm | Global PRT Red | 30 ppm |
| Example 2-3 | TEPA | 20 ppm | Global PRT Blue | 10 ppm | Global PRT Red | 30 ppm |
| Example2-4 | TEPA | 20 ppm | Global PRT Blue | 50 ppm | Global PRT Red | 50 ppm |
| Example 2-5 | TEPA | 20 ppm | Global PRT Blue | 120 ppm | Global PRT Red | 30 ppm |
| Example 2-6 | TEPA | 20 ppm | Global PRT Blue | 50 ppm | Global PRT Red | 70 ppm |

**Experimental Example 1: Moiety Composition of Copolymer**

For each of the polyester resin samples of the examples and the comparative examples, a moiety composition of a copolymer and a number average molecular weight (Mn) and a molecular weight distribution (MWD) of a polyester resin including the same were evaluated in the following method, and the results are shown in Table 2.

(1) Moiety Composition of Copolymer: A moiety composition (mol%) of a copolymer included in a polyester resin sample was checked by dissolving the sample in a $CDCl_3$ solvent at a concentration of 3 mg/mL and obtaining an 1H-NMR spectrum with a nuclear magnetic resonance device (600MHz FT-NMR, JEOL) at 25 °C.
(2) Number Average Molecular Weight (Mn) and Molecular Weight Distribution (MWD) of Polyester Resin:
Mw and Mn are measured by using gel permeation chromatography (GPC) to obtain a molecular weight distribution ("Mw/Mn").

Specifically, TSK gel guard column Super AW-H + 2 x TSK gel Super AWM-H (6.0 x 150 mm) column and HLC-8420 GPC made by Tosoh Company are used. Herein, the measurement was performed at 40 °C by using HFIP + 0.01 N NaTFA as a developing solvent at a flow rate of 0.3 mL/min.
Specifically, each of the polyester resin samples was prepared at a concentration of 3 mg/10 mL and then, supplied in an amount of 10 μL. The Mw and Mn were derived from a black curve formed by using a PMMA standard to obtain the molecular weight distribution ("Mw/Mn").

(Table 2)

| | Additive (Type; Amount) | | | Moiety composition of copolymer (mol%) | | Weight characteristics of polyester resin | |
|---|---|---|---|---|---|---|---|
| | Heat stabilizer | Blue dye | Red dye | FDCA-derived moiety | EG-derived moiety | Mn (g/mol) | MW D |
| Comparative Example 1-1 | - | - | - | 5.5 | 5.5 | 26,000 | 2.1 |
| Comparative Example 2-1 | TPP; 20 ppm | - | - | 5.5 | 5.5 | 26,000 | 2 |
| Comparative Example 2-2 | PA; 20 ppm | - | - | 5.5 | 5.5 | 26,000 | 2.1 |
| Comparative Example 2-3 | TEPA; 20 ppm | - | - | 5.5 | 5.5 | 26,000 | 1.9 |
| Comparative Example 2-4 | TEPA; 70 ppm | - | - | 5.5 | 5.5 | 26,000 | 1.8 |
| Comparative Example 3-1 | - | Solvent Blue45; 100 ppm | - | 5.5 | 5.5 | 26,000 | 2 |
| Comparative Example 3-2 | - | Global PRT Blue; 100 ppm, | - | 5.5 | 5.5 | 26,000 | 2.1 |
| Comparative Example 3-3 | - | - | Solvent Red 135; 30 ppm | 5.5 | 5.5 | 26,000 | 2.2 |
| Comparative Example 3-4 | - | - | Global PRT Red; 30 ppm | 5.5 | 5.5 | 26,000 | 2.3 |
| Comparative Example 4-1 | - | Solvent Blue45; 100 ppm | Solvent Red 135; 30 ppm | 5.5 | 5.5 | 26,000 | 2.4 |

(continued)

| | Additive (Type; Amount) | | | Moiety composition of copolymer (mol%) | | Weight characteristics of polyester resin | |
|---|---|---|---|---|---|---|---|
| | Heat stabilizer | Blue dye | Red dye | FDCA-derived moiety | EG-derived moiety | Mn (g/mol) | MW D |
| Comparative Example 4-2 | - | Global PRT Blue; 100 ppm | Global PRT Red; 30ppm | 5.5 | 5.5 | 26,000 | 2.3 |
| Example 1-1 | TEPA; 20 ppm | Solvent Blue45; 100 ppm | Solvent Red 135; 30 ppm | 5.5 | 5.5 | 26,000 | 1.8 |
| Example 1-2 | TEPA; 20 ppm | Solvent Blue 45; 50 ppm | Solvent Red 135; 30 ppm | 5.5 | 5.5 | 26,000 | 1.7 |
| Example 1-3 | TEPA; 20 ppm | Solvent Blue 45; 10 ppm | Solvent Red 135; 30ppm | 5.5 | 5.5 | 26,000 | 1.8 |
| Example 1-4 | TEPA; 20 ppm | Solvent Blue 45; 50 ppm | Solvent Red 135; 50 ppm | 5.5 | 5.5 | 26,000 | 1.6 |
| Example 1-5 | TEPA; 20 ppm | Solvent Blue45; 120 ppm | Solvent Red 135; 30 ppm | 5.5 | 5.5 | 26,000 | 1.9 |
| Example 1-6 | TEPA; 20 ppm | Solvent Blue 45; 50 ppm | Solvent Red 135; 70 ppm | 5.5 | 5.5 | 26,000 | 1.7 |
| Example 2-1 | TEPA; 20 ppm | Global PRT Blue; 100 ppm | Global PRT Red; 30ppm | 5.5 | 5.5 | 26,000 | 2 |
| Example 2-2 | TEPA; 20 ppm | Global PRT Blue; 50 ppm | Global PRT Red; 30 ppm | 5.5 | 5.5 | 26,000 | 1.8 |
| Example 2-3 | TEPA; 20 ppm | Global PRT Blue; 10 ppm | Global PRT Red; 30 ppm | 5.5 | 5.5 | 26,000 | 1.8 |
| Example 2-4 | TEPA; 20 ppm | Global PRT Blue; 50 ppm | Global PRT Red; 50 ppm | 5.5 | 5.5 | 26,000 | 1.7 |
| Example 2-5 | TEPA; 20 ppm | Global PRT Blue; 120 ppm | Global PRT Red; 30 ppm | 5.5 | 5.5 | 26,000 | 1.9 |
| Example 2-6 | TEPA; 20 ppm | Global PRT Blue; 50 ppm | Global PRT Red; 70 ppm | 5.5 | 5.5 | 26,000 | 1.7 |

Referring to Table 2, the examples and the comparative examples were confirmed to have the same moiety composition of the final copolymers and the same weight characteristics of the polyester resins respectively including the same. This is because the copolymers of the examples and the comparative examples were prepared through all the same raw material mixing. On the other hand, all the examples and comparative examples used a phosphorus-based heat stabilizer but particularly, used triethyl phosphonoacetate (Comparative Examples 2-3 and 2-4, Examples 1-1 to 1-5 and 2-1 to 2-6), which exhibited a low molecular weight distribution of 2 or less.

**Experimental Example 2: Remaining Amount of Additives in Polyester Resin**

Each of the polyester resin samples of the examples and the comparative examples was evaluated with respect to an additive remaining amount in the following method, and the results are shown in Table 3.

The polyester samples were respectively taken by 1 g and frozen under a liquid nitrogen for 10 min. After grinding each sample by using a grinder, the sample was added to 100 ml of normal hexane per 1 g of the sample and then, Soxhlet-extracted for 6 hours and finally concentrated or diluted to 50 to 250 ml, and 10 to 50 ug of an internal standard material (fluoranthene-d10) was added thereto to perform a GC/MS analysis. A ratio of each content of a heat stabilizer, a blue dye, and a red dye to that of the internal standard material was calculated to check an amount remaining in the sample.

(Table 3)

| | Types and amounts of additives and remaining amount | | | | | | | | |
|---|---|---|---|---|---|---|---|---|---|
| | Heat stabilizer | | | Blue dye | | | Red dye | | |
| | Type | Amount | Remaining amount | Type | Amount | Remaining amount | Type | Amount | Remaining amount |
| Comparative Example 1-1 | - | - | - | - | - | - | - | - | - |
| Comparative Example 2-1 | TPP | 20 ppm | 19.1 ppm | - | - | - | - | - | - |
| Comparative Example 2-2 | PA | 20 ppm | 20.1 ppm | - | - | - | - | - | - |
| Comparative Example 2-3 | TEPA | 20 ppm | 19.5 ppm | - | - | - | - | - | - |
| Comparative Example 2-4 | TEPA | 70 ppm | 70 ppm | - | - | - | - | - | - |
| Comparative Example 3-1 | - | - | - | Solvent Blue 45 | 100 ppm | 98.7 ppm | - | - | - |
| Comparative Example3-2 | - | - | - | Global PRT Blue | 100 ppm | 99.7 ppm | - | - | - |
| Comparative Example 3-3 | - | - | - | - | - | - | Solvent Red 135 | 30 ppm | 29.9 ppm |
| Comparative Example 3-4 | - | - | - | - | - | - | Global PRT Red | 30 ppm | 30.1 ppm |
| Comparative Example 4-1 | - | - | - | Solvent Blue 45 | 100 ppm | 95.1 ppm | Solvent Red 135 | 30 ppm | 29.1 ppm |
| Comparative Example 4-2 | - | - | - | Global PRT Blue | 100 ppm | 99.1 ppm | Global PRT Red | 30 ppm | 30.2 ppm |
| Example 1-1 | TEPA | 20 ppm | 20.1 ppm | Solvent Blue 45 | 100 ppm | 99.9 ppm | Solvent Red 135 | 30 ppm | 30.4 ppm |
| Example 1-2 | TEPA | 20 ppm | 19.7 ppm | Solvent Blue 45 | 50 ppm | 49.7 ppm | Solvent Red 135 | 30 ppm | 29.7 ppm |
| Example 1-3 | TEPA | 20 ppm | 20.4 ppm | Solvent Blue 45 | 10 ppm | 9.8 ppm | Solvent Red 135 | 30 ppm | 30.6 ppm |
| Example 1-4 | TEPA | 20 ppm | 19.1 ppm | Solvent Blue 45 | 50 ppm | 50.1 ppm | Solvent Red 135 | 50 ppm | 50.4 ppm |

(continued)

| | Types and amounts of additives and remaining amount | | | | | | | | |
|---|---|---|---|---|---|---|---|---|---|
| | Heat stabilizer | | | Blue dye | | | Red dye | | |
| | Type | Amount | Remaining amount | Type | Amount | Remaining amount | Type | Amount | Remaining amount |
| Example 1-5 | TEPA | 20 ppm | 20.1 ppm | Solvent Blue 45 | 120 ppm | 120.5 ppm | Solvent Red 135 | 30 ppm | 30 ppm |
| Example 1-6 | TEPA | 20 ppm | 19.6 ppm | Solvent Blue 45 | 50 ppm | 50.5 ppm | Solvent Red 135 | 70 ppm | 69.1 ppm |
| Example 2-1 | TEPA | 20 ppm | 19.5 ppm | Global PRT Blue | 100 ppm | 100.4 ppm | Global PRT Red | 30 ppm | 30.8 ppm |
| Example 2-2 | TEPA | 20 ppm | 18.9 ppm | Global PRT Blue | 50 ppm | 50.2 ppm | Global PRT Red | 30 ppm | 30 ppm |
| Example 2-3 | TEPA | 20 ppm | 20.3 ppm | Global PRT Blue | 10 ppm | 10.1 ppm | Global PRT Red | 30 ppm | 29.6ppm |
| Example 2-4 | TEPA | 20 ppm | 20.4 ppm | Global PRT Blue | 50 ppm | 50.7 ppm | Global PRT Red | 50 ppm | 49.9 ppm |
| Example 2-5 | TEPA | 20 ppm | 19.3 ppm | Global PRT Blue | 120 ppm | 119.8 ppm | Global PRT Red | 30 ppm | 30.2 ppm |
| Example 2-6 | TEPA | 20 ppm | 19.8 ppm | Global PRT Blue | 50 ppm | 49.8 ppm | Global PRT Red | 70 ppm | 69.7 ppm |

Referring to Table 3, all the examples and comparative examples were confirmed that most of the heat stabilizer and the complementary colorant remained. A partial decrease in a remaining amount to an addition amount was inferred to due to a loss during the reaction.

**Experimental Example 3: Color Characteristics of Polyester Resin**

Each of the polyester resin samples of the examples and the comparative examples was evaluated with respect to color characteristics in the following method, and the results are shown in Table 4.

Using a CM-3700A colorimeter from Konica Minolta, L*, a*, and b* values were measured under the following conditions. Specifically, 2 g of each of the polyester resins is dissolved in 20 ml of hexafluoroisopropanol (HFIP) (0.1 g/ml in HFIP). The sample solution is measured with respect to colorimeter in a Tuartz cell dedicated for measuring the colorimeter by using CM-3700A made by Konica Minolta Sensing Inc.

(Table 4)

| | Additives (Type; Amount) | | | Color characteristics of polyester resin | | |
|---|---|---|---|---|---|---|
| | Heat stabilizer | Blue dye | Red dye | L* | a* | b* |
| Comparative Example 1-1 | - | - | - | 94.01 | -0.82 | 4.13 |
| Comparative Example 2-1 | TPP; 20 ppm | - | - | 94.81 | -0.91 | 3.91 |
| Comparative Example 2-2 | PA; 20 ppm | - | - | 96.35 | -1.1 | 3.03 |
| Comparative Example 2-3 | TEPA; 20 ppm | - | - | 96.79 | -1.1 | 2.91 |

(continued)

| | Additives (Type; Amount) | | | Color characteristics of polyester resin | | |
|---|---|---|---|---|---|---|
| | Heat stabilizer | Blue dye | Red dye | L* | a* | b* |
| Comparative Example 2-4 | TEPA; 70 ppm | - | - | 97.01 | -1.2 | 1.91 |
| Comparative Example 3-1 | - | Solvent Blue 45; 100 ppm | - | 91.31 | -2.82 | -0.17 |
| Comparative Example 3-2 | - | Global PRT Blue; 100 ppm, | - | 90.81 | 5.18 | 1.93 |
| Comparative Example 3-3 | - | - | Solvent Red 135; 30 ppm | 91.79 | -3.04 | 2.81 |
| Comparative Example 3-4 | - | - | Global PRT Red; 30 ppm | 93.05 | 1.07 | 4.79 |
| Comparative Example 4-1 | - | Solvent Blue 45; 100 ppm | Solvent Red 135; 30 ppm | 91.79 | -3.04 | 2.81 |
| Comparative Example 4-2 | - | Global PRT Blue; 100 ppm | Global PRT Red; 30 ppm | 93.05 | 1.07 | 4.79 |
| Example 1-1 | TEPA; 20 ppm | Solvent Blue 45; 100 ppm | Solvent Red 135; 30 ppm | 93.07 | -1.51 | -0.97 |
| Example 1-2 | TEPA; 20 ppm | Solvent Blue 45; 50 ppm | Solvent Red 135; 30 ppm | 94.42 | -0.31 | 0.12 |
| Example 1-3 | TEPA; 20 ppm | Solvent Blue 45; 10 ppm | Solvent Red 135; 30 ppm | 95.69 | 0.63 | 1.16 |
| Example 1-4 | TEPA; 20 ppm | Solvent Blue 45; 50 ppm | Solvent Red 135; 50 ppm | 93.52 | 0.45 | 0.56 |
| Example 1-5 | TEPA; 20 ppm | Solvent Blue 45; 120 ppm | Solvent Red 135; 30 ppm | 92.53 | -1.91 | -3.57 |
| Example 1-6 | TEPA; 20 ppm | Solvent Blue 45; 50 ppm | Solvent Red 135; 70 ppm | 93.21 | 1.56 | 2.34 |
| Example 2-1 | TEPA; 20 ppm | Global PRT Blue; 100 ppm | Global PRT Red; 30 ppm | 94.43 | -0.24 | 0.15 |
| Example 2-2 | TEPA; 20 ppm | Global PRT Blue; 50 ppm | Global PRT Red; 30 ppm | 94.42 | -0.01 | 1.2 |
| Example 2-3 | TEPA; 20 ppm | Global PRT Blue; 10 ppm | Global PRT Red; 30 ppm | 95.69 | 0.63 | 2.04 |
| Example 2-4 | TEPA; 20 ppm | Global PRT Blue; 50 ppm | Global PRT Red; 50 ppm | 93.12 | 0.21 | 0.11 |
| Example 2-5 | TEPA; 20 ppm | Global PRT Blue; 120 ppm | Global PRT Red; 30 ppm | 93.53 | -2.11 | -2.57 |
| Example 2-6 | TEPA; 20 ppm | Global PRT Blue; 50 ppm | Global PRT Red; 70 ppm | 93.21 | 1.56 | 2.61 |

Referring to Table 4, when a phosphorus-based heat stabilizer and particularly, triethyl phosphonoacetate was used, and simultaneously, a red dye and a blue dye were used as a complementary colorant (Examples 1-1 to 1-6 and 2-1 to 2-6), a final polyester resin was confirmed to have L* of greater than or equal to 92 to less than or equal to 97, a*

of less than or equal to 2, and b* of less than or equal to 3 according to CIE1976 L*a*b* color system. On the other hand, when the phosphorus-based heat stabilizer and particularly, triethyl phosphonoacetate was used, and simultaneously, the red dye and the blue dye were used as a complementary colorant, color characteristics of the final polyester resin was adjusted according to types and amounts of the red and blue dyes, etc.

**Experimental Example 4: Physical Properties of Polyester Resin**

Each of the polyester resins of Example 1 and the comparative examples were evaluated with respect to intrinsic viscosity and glass transition temperature in the following method, and the results are shown in Table 5.

1) Intrinsic Viscosity (IV): 0.5 g of each of the polyester resin samples was dissolved in 10 ml of a solvent of phenol: tetrachloroethane mixed in a ratio of 1:1 to measure intrinsic viscosity (IV) at 25 °C and 35 °C by using an Ostwald viscometer.
2) Glass Transition Temperature (Tg): Each of the polyester resin samples were measured with respect to a glass transition temperature under the conditions of $N_2$, 20 psi, and room temperature to 300 °C at 20 °C/min by using DSC made by TA Instrument.

(Table 5)

| | Amount of additive (ppm) | | | Physical properties of polyester resin | | | |
|---|---|---|---|---|---|---|---|
| | Heat stabiliz er | Blue dye | Red dye | IV@ 25 °C (dl/g) | IV@ 35 °C (dl/g) | △IV (IV@25 °C - IV@35 °C) | Glass transition temperatur e (°C) |
| Comparative Example 1-1 | - | - | - | 94.01 | 0.651 | 0.510 | 0.141 |
| Comparative Example 2-1 | TPP; 20 ppm | - | - | 94.81 | 0.657 | 0.512 | 0.145 |
| Comparative Example 2-2 | PA; 20 ppm | - | - | 96.35 | 0.653 | 0.510 | 0.143 |
| Comparative Example 2-3 | TEPA; 20 ppm | - | - | 96.79 | 0.652 | 0.510 | 0.142 |
| Comparative Example 2-4 | TEPA; 70 ppm | - | - | 97.01 | 0.45 | 0.428 | 0.022 |
| Comparative Example 3-1 | - | Solvent Blue 45; 100ppm | - | 91.31 | 0.65 | 0.509 | 0.141 |
| Comparative Example 3-2 | - | Global PRT Blue; 100 ppm, | - | 90.81 | 0.657 | 0.512 | 0.145 |
| Comparative Example 3-3 | - | - | Solvent Red 135; 30 ppm | 0.651 | 0.509 | 0.142 | 86.7 |
| Comparative Example 3-4 | - | - | Global PRT Red; 30 ppm | 0.65 | 0.509 | 0.141 | 87.4 |
| Comparative Example 4-1 | - | Solvent Blue 45; 100 ppm | Solvent Red 135; 30 ppm | 0.65 | 0.509 | 0.141 | 86.5 |
| Comparative Example 4-2 | - | Global PRT Blue; 100 ppm | Global PRT Red; 30 ppm | 0.649 | 0.508 | 0.141 | 87 |
| Example 1-1 | TEPA; 20 ppm | Solvent Blue 45; 100ppm | Solvent Red 135; 30 ppm | 0.651 | 0.509 | 0.142 | 87.2 |

(continued)

| | Amount of additive (ppm) | | | Physical properties of polyester resin | | | |
|---|---|---|---|---|---|---|---|
| | Heat stabilizer | Blue dye | Red dye | IV@ 25 °C (dl/g) | IV@ 35 °C (dl/g) | △IV (IV@25 °C - IV@35 °C) | Glass transition temperature (°C) |
| Example 1-2 | TEPA; 20 ppm | Solvent Blue 45; 50 ppm | Solvent Red 135; 30 ppm | 0.652 | 0.510 | 0.142 | 86.1 |
| Example 1-3 | TEPA; 20 ppm | Solvent Blue 45; 10ppm | Solvent Red 135; 30 ppm | 0.655 | 0.511 | 0.144 | 86.3 |
| Example 1-4 | TEPA; 20 ppm | Solvent Blue 45; 50 ppm | Solvent Red 135; 50 ppm | 0.65 | 0.509 | 0.141 | 86.7 |
| Example 1-5 | TEPA; 20 ppm | Solvent Blue 45; 120 ppm | Solvent Red 135; 30 ppm | 0.648 | 0.508 | 0.140 | 87.1 |
| Example 1-6 | TEPA; 20 ppm | Solvent Blue 45; 50 ppm | Solvent Red 135; 70 ppm | 0.648 | 0.508 | 0.140 | 87 |
| Example 2-1 | TEPA; 20 ppm | Global PRT Blue; 100 ppm | Global PRT Red; 30 ppm | 0.651 | 0.509 | 0.142 | 87.3 |
| Example 2-2 | TEPA; 20 ppm | Global PRT Blue; 50 ppm | Global PRT Red; 30 ppm | 0.653 | 0.510 | 0.143 | 86.8 |
| Example 2-3 | TEPA; 20 ppm | Global PRT Blue; 10 ppm | Global PRT Red;30 ppm | 0.651 | 0.509 | 0.142 | 86.6 |
| Example 2-4 | TEPA; 20 ppm | Global PRT Blue; 50 ppm | Global PRT Red; 50 ppm | 0.65 | 0.509 | 0.141 | 87 |
| Example 2-5 | TEPA; 20 ppm | Global PRT Blue; 120 ppm | Global PRT Red; 30 ppm | 0.65 | 0.509 | 0.141 | 87.1 |
| Example 2-6 | TEPA; 20 ppm | Global PRT Blue; 50 ppm | Global PRT Red; 70 ppm | 0.652 | 0.510 | 0.142 | 87.1 |

Referring to Table 5, the case of using a red dye as a complementary colorant (Comparative Examples 3-3 and 3-4 and 4-1 and 4-2, Examples 1-1 to 1-6 and 2-1 to 2-6) exhibited each significant decrease in intrinsic viscosity ($IV_1$) at 2 5°C, intrinsic viscosity ($IV_2$) at 35 °C, and intrinsic viscosity change ($IV_1$-$IV_2$) of the final polyester resins but a significant increase in a glass transition temperature. On the other hand, even when the red dye was used, the intrinsic viscosity and the glass transition temperature of the final polyester resins turned out to be adjusted according to a type and an amount of the red dye.

**Experimental Example 5: Physical Properties of Film Including Polyester Resin**

Each of the polyester resins according to Example 1 and Comparative Example is formed into a film and then, evaluated with respect to properties, and the results are shown in Table 6.

1) Transmittance

First, a biaxially stretched film of a polyester resin sample was prepared. Specifically, the polyester resin sample is melted at 180 to 260 °C in an extruder.

The melt is extruded through a die and molded into a sheet and then, rapidly cooled. Accordingly, the obtained sheet is 3 times stretched in a machine direction (MD) and 3.7 times stretched in a transverse direction (TD). The stretched film is thermally fixed at 120 to 160 °C under tension to obtain the biaxially stretched film.

The prepared polyester film is cut into a size of 10 cm X 10 cm (vertical direction length X horizontal length) to

prepare a specimen. The specimen is measured with respect to parallel transmittance and diffusion transmittance in an ASTM D1003-97 measurement method by using CM-3600A made by Minolta Co., Ltd. Herein, the transmittance is defined by combining the parallel transmittance and the diffusion transmittance. Accordingly, the parallel transmittance and the diffusion transmittance of the specimen are combined to obtain the transmittance.

2) Tensile Strength, and Elongation and Elasticity Coefficient

The polyester resin specimens were prepared into an ASTM D638-V type specimen by using a Microcompounder extruder at an extrusion temperature of 220 °C to 260 °C at a screw speed of 100 to 120 rpm. The specimens for evaluating mechanical properties were mounted by using Vice grips under a universal testing machine UTM 5566A (Instron). The specimens were respectively stretched at 5 mm/min at room temperature until it broke to measure strength where it broke as tensile strength, a length that it was stretched as elongation, and a slope of a load to initial deformation as an elasticity coefficient (Tensile Modulus).

(Table 6)

| | Physical properties of film | | | |
|---|---|---|---|---|
| | Transmittance (%) | Tensile Modulus (MPa) | Tensile Strength (MPa) | Elongation (%) |
| Comparative Example 1-1 | 89.02 | 1510 | 125 | 20 |
| Comparative Example 2-1 | 89.9 | 1500 | 121.1 | 21.5 |
| Comparative Example 2-2 | 91.4 | 1520 | 122.4 | 21 |
| Comparative Example 2-3 | 91.8 | 1500 | 121.6 | 22.5 |
| Comparative Example 2-4 | 92.05 | 1100 | 110 | 6.1 |
| Comparative Example 3-1 | 86.2 | 1490 | 125 | 24.1 |
| Comparative Example 3-2 | 85.5 | 1500 | 121 | 22.5 |
| Comparative Example 3-3 | 86.81 | 1540 | 123 | 21 |
| Comparative Example 3-4 | 88.12 | 1570 | 121 | 20.4 |
| Comparative Example 4-1 | 85.31 | 1610 | 120 | 21.8 |
| Comparative Example 4-2 | 86.7 | 1620 | 125 | 21.9 |
| Example 1-1 | 88.91 | 1530 | 119.1 | 22.4 |
| Example 1-2 | 89.51 | 1570 | 120.5 | 23 |
| Example 1-3 | 90.9 | 1510 | 120.7 | 23.1 |
| Example 1-4 | 88.43 | 1500 | 119.6 | 22.9 |
| Example 1-5 | 87.7 | 1590 | 123 | 22 |
| Example 1-6 | 88.49 | 1600 | 118.1 | 21.8 |
| Example 2-1 | 89.27 | 1590 | 121 | 20.8 |
| Example 2-2 | 89.41 | 1570 | 126.1 | 20.7 |
| Example 2-3 | 90.81 | 1540 | 127.1 | 20.5 |
| Example 2-4 | 88.15 | 1510 | 128.1 | 20.4 |
| Example 2-5 | 88.41 | 1610 | 117 | 21.1 |
| Example 2-6 | 88.31 | 1500 | 124 | 20.8 |

Referring to Table 6, the case of using a complementary colorant (Comparative Examples 2-1 to 2-4, 3-1 to 3-4, and 4-1 and 4-2 and Examples 1-1 to 1-6 and 2-1 to 2-6) exhibited similar film transmittance, tensile strength, elongation, and elasticity coefficient.

## Claims

1. A polyester resin, comprising

   a copolymer including a diacid moiety and a diol moiety;
   a phosphorus-based heat stabilizer; and
   a complementary colorant,
   wherein the diacid moiety includes a furandicarboxylic acid-based compound-derived moiety,
   the diol moiety includes an alkylene glycol-based compound-derived moiety,
   the phosphorus-based heat stabilizer includes an ester group at a terminal end thereof,
   the complementary colorant includes a blue dye and a red dye.

2. The polyester resin of claim 1, wherein

   the phosphorus-based heat stabilizer including an ester group at the terminal end is represented by Chemical Formula 1:

   [Chemical Formula 1]

   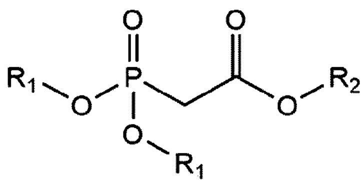

   wherein, in Chemical Formula 1,
   $R_1$s arethe same or different and is a substituted or unsubstituted $C_{1-10}$ alkyl; and
   $R_2$ is substituted or unsubstituted $C_{1-10}$ alkyl.

3. The polyester resin of claim 2, wherein

   the phosphorus-based heat stabilizer including an ester group at the terminal end is trimethyl phosphonoacetate, triethyl phosphonoacetate, or a combination thereof.

4. The polyester resin of claim 3, wherein

   in the polyester resin,
   when 1 g of the polyester resin is frozen under liquid nitrogen for 10 minutes and then pulverized, 100 ml of normal hexane is added per 1 g of the pulverized polyester resin, and Soxhlet extraction is performed for 6 hours to concentrate or dilute to a final volume of 50 to 250 ml, 10 to 50 μg of fluoranthene-d10 is added as an internal standard material, GC/MS analysis is performed, and a remaining amount of the heat stabilizer including an ester group at the terminal end in the polyester resin is calculated as a relative ratio compared to the internal standard material,
   based on a weight of the copolymer, 1 to 50 ppm of the heat stabilizer including the ester group at the terminal end is included.

5. The polyester resin of claim 1, wherein
   the blue dye is an anthraquinone-based blue dye, a phthalocyanine-based blue dye, or a combination thereof.

6. The polyester resin of claim 5, wherein

   in the polyester resin,
   1 g of the polyester resin is frozen under liquid nitrogen for 10 minutes and then pulverized, 100 ml of normal hexane is added per 1 g of the pulverized polyester resin, and Soxhlet extraction is performed for 6 hours to concentrate or dilute to a final volume of 50 to 250 ml, 10 to 50 μg of fluoranthene-d10 is added as an internal standard material, GC/MS analysis is performed, and a remaining amount of the blue dye in the polyester resin

is calculated as a relative ratio compared to the internal standard material,
based on a weight of the copolymer, 1 to 150 ppm of the blue dye is included.

**7.** The polyester resin of claim 1, wherein
the red dye is a perrinone-based red dye, an azo-based red dye, or a combination thereof.

**8.** The polyester resin of claim 7, wherein

in the polyester resin,
1 g of the polyester resin is frozen under liquid nitrogen for 10 minutes and then pulverized, 100 ml of normal hexane is added per 1 g of the pulverized polyester resin, and Soxhlet extraction is performed for 6 hours to concentrate or dilute to a final volume of 50 to 250 ml, 10 to 50 μg of fluoranthene-d10 is added as an internal standard material, GC/MS analysis is performed, and a remaining amount of the red dye in the polyester resin is calculated as a relative ratio compared to the internal standard material,
based on a weight of the copolymer, 1 to 100 ppm of the red dye is included.

**9.** The polyester resin of claim 1, wherein

the complementary colorant includes
the blue dye and the red dye in a weight ratio (blue: red) of 1:9 to 9:1.

**10.** The polyester resin of claim 1, wherein
the polyester resin has a number average molecular weight of 20,000 to 30,000 g/mol.

**11.** The polyester resin of claim 1, wherein
the polyester resin has a molecular weight distribution of 2.5 or less (but greater than 0).

**12.** The polyester resin of claim 1, wherein
the polyester resin has an L* value of 92 or more and 97 or less, an a* value of 2 or less, and a b* value of 3 or less, when measured using a solution colorimeter according to the CIE1976 L*a*b* color system after dissolving 2 g of the polyester resin in 20 ml of hexafluoroisopropanol (HFIP) solvent at a concentration of 0.1 g/ml.

**13.** The polyester resin of claim 1, wherein

the polyester resin has
a change in intrinsic viscosity ($\triangle IV_{12}$) of 0.4 (but greater than 0) dl/g according to Equation 1:

[Equation 1]

$$\triangle IV_{12} = IV_1 - IV_2$$

wherein, in Equation 1,
$IV_1$ is an intrinsic viscosity at 25 °C and $IV_2$ is an intrinsic viscosity at 35 °C.

**14.** The polyester resin of claim 1, wherein

the polyester resin has
a glass transition temperature (Tg) of 50 to 100 °C.

**15.** A method of preparing a polyester resin, comprising

esterifying a monomer mixture including a diacid component and a diol component;
pre-polymerizing a esterification reaction product in the presence of a phosphorus-based heat stabilizer and a complementary colorant; and
subjecting the pre-polymerized polymer to a poly-condensation reaction,
wherein the diacid component includes a furan dicarboxylic acid-based compound,
the diol component includes an alkylene glycol-based compound,

the phosphorus-based heat stabilizer includes an ester group at the terminal end thereof, and
the complementary colorant includes a blue dye and a red dye.

**16.** The method of claim 15, wherein
the monomer mixture includes 100 to 200 moles of the alkylene glycol-based compound based on 100 moles of the furan dicarboxylic acid-based compound.

**17.** The method of claim 15, wherein
the esterification reaction is performed in a temperature range of 180 to 220 °C.

**18.** The method of claim 15, wherein
the esterification reaction is performed under nitrogen ($N_2$) atmosphere.

**19.** The method of claim 15, wherein
the esterification reaction is performed under a pressure of 1 to 5.5 atm.

**20.** The method of claim 15, wherein

during the pre-polymerization,
based on a weight of the esterification reaction product, the phosphorus-based heat stabilizer including the ester group at the terminal end is used at 1 to 50 ppm, the blue dye is used at 1 to 150 ppm, and the red dye is used at 1 to 100 ppm.

**21.** The method of claim 15, wherein

the pre-polymerization includes
increasing a temperature until it reaches a temperature range of 220 to 280 °C; and
maintaining the increased temperature and pre-polymerizing the esterification reaction product.

**22.** The method of claim 21, wherein

when the temperature is increased, the pressure is reduced until it reaches 0 to 1 atm, and
the increased pressure is maintained when the increased temperature is maintained.

**23.** The method of claim 15, wherein
the poly-condensation reaction is performed at a temperature range of 220 to 280 °C.

**24.** The method of claim 15, wherein
the poly-condensation reaction is performed for 2 to 8 hours.

| INTERNATIONAL SEARCH REPORT | International application No. PCT/KR2022/018841 |
|---|---|

**A. CLASSIFICATION OF SUBJECT MATTER**

**C08K 5/521**(2006.01)i; **C08K 5/00**(2006.01)i; **C08L 67/02**(2006.01)i; **C08G 63/672**(2006.01)i; **C08G 63/78**(2006.01)i

According to International Patent Classification (IPC) or to both national classification and IPC

**B. FIELDS SEARCHED**

Minimum documentation searched (classification system followed by classification symbols)

C08K 5/521(2006.01); B29C 49/00(2006.01); B29C 49/64(2006.01); C08G 63/16(2006.01); C08G 63/672(2006.01); C08G 63/78(2006.01); C08K 3/00(2006.01); C08K 5/5317(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 퓨란디카르복실산(furan dicarboxylic acid), 폴리에스테르(polyester), 인(phosphorus), 열안정제(heat stabilizer), 염료(dye), 블루(blue), 레드(red), 예비중합(prepolymerization)

**C. DOCUMENTS CONSIDERED TO BE RELEVANT**

| Category* | Citation of document, with indication, where appropriate, of the relevant passages | Relevant to claim No. |
|---|---|---|
| Y | JP 2015-160871 A (TEIJIN LTD.) 07 September 2015 (2015-09-07) See claims 1-3; and paragraphs [0040], [0041] and [0043]. | 1-24 |
| Y | KR 10-1840124 B1 (LOTTE CHEMICAL CORPORATION) 19 March 2018 (2018-03-19) See claims 2-7; and paragraphs [0001] and [0060]. | 1-24 |
| A | KR 10-2019-0053144 A (S-ENPOL CO., LTD. et al.) 17 May 2019 (2019-05-17) See claims 1-7. | 1-24 |
| A | CN 111269405 A (ZHEJIANG HENGLAN TECHNOLOGY CO., LTD.) 12 June 2020 (2020-06-12) See claims 1-10. | 1-24 |
| A | WO 2020-251361 A1 (HOLLAND COLOURS N.V.) 17 December 2020 (2020-12-17) See claims 1-8. | 1-24 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 March 2023** | **08 March 2023** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/018841**

| Patent document cited in search report | Publication date (day/month/year) | Patent family member(s) | Publication date (day/month/year) |
|---|---|---|---|
| JP 2015-160871 A | 07 September 2015 | JP 6342673 B2 | 13 June 2018 |
| KR 10-1840124 B1 | 19 March 2018 | None | |
| KR 10-2019-0053144 A | 17 May 2019 | CN 104619744 A | 13 May 2015 |
| | | CN 104619744 B | 26 October 2016 |
| | | EP 2894183 A1 | 15 July 2015 |
| | | JP 2015-526580 A | 10 September 2015 |
| | | KR 10-1992393 B1 | 24 June 2019 |
| | | KR 10-2014-0031011 A | 12 March 2014 |
| | | US 2015-0252142 A1 | 10 September 2015 |
| | | US 9334359 B2 | 10 May 2016 |
| | | WO 2014-038773 A1 | 13 March 2014 |
| CN 111269405 A | 12 June 2020 | CN 111269405 B | 01 April 2022 |
| WO 2020-251361 A1 | 17 December 2020 | BR 112021025258 A2 | 15 February 2022 |
| | | CN 114127189 A | 01 March 2022 |
| | | CO 2022000140 A2 | 29 April 2022 |
| | | EP 3983195 A1 | 20 April 2022 |
| | | US 2022-0282060 A1 | 08 September 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *CHEMICAL ABSTRACTS,* 23552-74-1
- *CHEMICAL ABSTRACTS,* 20749-68-2